# FASCICULE DE BREVET EUROPEEN

(11) **EP 4 370 353 B1**
(45) Date de publication et mention de la délivrance du brevet: **24.12.2025**
(21) Numéro de dépôt: 22753728.9
(22) Date de dépôt: 21.07.2022
(51) Int. Cl.: B60B 1/04, B60B 31/00, B60B 31/02

(54) **PROCÉDÉ ET INSTALLATION D'ENFILAGE DE RAYONS DANS UN MOYEU À DEUX FLASQUES D'UNE ROUE À RAYONS**
VERFAHREN UND ANLAGE ZUM EINFÄDELN VON SPEICHEN IN EINE ZWEIFLANSCHNABE EINES SPEICHENRADES
METHOD AND INSTALLATION FOR THREADING SPOKES INTO A TWO-FLANGED HUB OF A SPOKED WHEEL

(30) Priorité: 06.09.2021 FR 2109283
(43) Date de publication de la demande: 22.05.2024
(73) Titulaire: BIKEBOTIX, 74730 Villaz (FR)
(72) Inventeur: GAILLARD, Emmanuel, 74370 VILLAZ (FR); RODIER, Jean Louis, 74800 SAINT-PIERRE EN FAUCIGNY (FR)
(74) Mandataire: Ipsilon
(86) Numéro de dépôt international: PCT/FR2022/051463
(87) Numéro de publication internationale: WO 2023/031531

(56) Documents cités:
- JP-A- H03 176 203
- US-A- 4 538 332
- US-B1- 6 401 337

## Description

### Domaine technique

L'invention se rattache au secteur technique de la fabrication de roues à rayons destinées à équiper des véhicules de locomotion, tels que des vélos ou des motocyclettes par exemple.

Plus précisément, l'invention concerne un procédé et une installation d'enfilage de rayons dans un moyeu à deux flasques d'une roue à rayons.

### Art antérieur

Les moyeux des roues à rayons comportent généralement une portion centrale cylindrique montée libre en rotation autour d'un axe, et bordée à ses deux extrémités par des flasques perpendiculaires, comportant chacun une couronne d'orifices destinés à recevoir des rayons pour relier le moyeu à la jante de la roue.

Il est notamment connu de l'art antérieur d'enfiler les rayons dans les orifices du moyeu par l'intermédiaire de dispositifs d'éjection, appelé pistolets, ou « Gun » en anglais pour réaliser cette opération de manière rapide et automatique.

Des pistolets, par exemple deux ou quatre, sont alors positionnés de part et d'autre du moyeu et insèrent automatiquement les rayons dans les orifices du moyeu.

Notamment, pour réaliser cette opération, le moyeu est entraîné en rotation autour de son axe selon des pas successifs pour positionner les orifices des flasques, un par un, devant les dispositifs d'éjection de rayons qui sont actionnés successivement pour éjecter un rayon dans les orifices afin de réaliser les opérations d'enfilage en tant que telles.

Les documents US6401337, US4538332 et JPH03176203 illustrent l'art antérieur.

La difficulté dans ce type d'opération est de positionner correctement les orifices devant les dispositifs d'éjection pour ne pas rater l'enfilage, en notant que la précision de la position des orifices sur le moyeu est aléatoire, aussi bien en termes de position angulaire, que de position radiale par rapport au centre du moyeu.

### Exposé de l'invention

L'un des buts de l'invention est donc de fournir un procédé et une installation permettant d'enfiler des rayons dans des orifices d'un moyeu avec une précision optimale, tout en s'affranchissant des tolérances des positions angulaires et radiales des orifices.

À cet effet, il a été mis au point un procédé d'enfilage de rayons dans un moyeu à deux flasques d'une roue à rayons, les flasques étant chacun pourvu d'une couronne d'orifices de réception des rayons. Le moyeu est entraîné en rotation autour de son axe selon des pas successifs pour positionner les orifices des flasques, un par un, devant des dispositifs d'éjection de rayons qui sont actionnés successivement pour éjecter un rayon dans les orifices afin de réaliser les opérations d'enfilage en tant que telles.

Selon l'invention, le procédé est remarquable en ce que, préalablement au positionnement des orifices devant les dispositifs d'éjection, le procédé comprend des étapes consistant à :
- déterminer les positions angulaires et radiales, et notamment les variations de positions angulaires et radiales des orifices par rapport à un référentiel dont les coordonnées, notamment de positionnement dans un repère orthonormé, sont connues ;
   * soit en faisant tourner le moyeu, et par une combinaison d'un capteur de position angulaire du moyeu et de moyens de détection des orifices;
   * soit par des capteurs CCD associés à un système de traitement d'image permettant de détecter à la fois les positions angulaires et les positions radiales des orifices;
- réaliser ensuite les opérations d'enfilage des rayons en commandant les pas de pivotement successifs du moyeu en fonction des positions angulaires des orifices préalablement déterminées, et en commandant, lors du positionnement des orifices devant les dispositifs d'éjection, un déplacement radial relatif entre le dispositif d'éjection correspondant et le moyeu, en fonction des positions radiales des orifices préalablement déterminées.

De cette manière, le procédé selon l'invention permet, avant d'enfiler un rayon, de connaître les positions angulaires et radiales des orifices sur la couronne d'orifices en vue d'accélérer les opérations ultérieures d'enfilage des rayons, tout en évitant les mauvais positionnements des orifices devant les dispositifs d'éjection. Le procédé permet en outre de corriger de s'adapter à des moyeux dont les orifices ne seraient ni régulièrement répartis angulairement, ni alignés sur un cercle (avec des variations de position radiales).

Selon l'invention, les positions angulaires des orifices peuvent être déterminées en faisant tourner le moyeu, par exemple d'un tour complet préalablement à toute opération d'enfilage des rayons, ou par pas successifs pendant les opérations d'enfilage des rayons, et par une combinaison d'un capteur de position angulaire du moyeu et de moyens de détection des orifices.

Par exemple, le capteur de position angulaire du moyeu est un codeur rotatif entraîné en rotation avec le moyeu, en étant par exemple positionné contre la tranche de l'un des flasques ou bien contre une partie du moyeu, telle que la portion cylindrique entre les deux flasques.

Les moyens de détection des orifices peuvent être de toutes formes appropriées. Par exemple, ils se présentent sous la forme de cellules de photo-détection, de capteurs laser, ou tous autres capteurs optiques.

Toujours selon l'invention, les positions angulaires et radiales des orifices peuvent être déterminées par des caméras ou capteurs CCD, associés à un système de traitement d'image permettant de détecter à la fois les positions angulaires et les positions radiales des orifices, et par exemple soit préalablement à toute opération d'enfilage des rayons sans faire tourner le moyeu, soit pendant la rotation par pas successifs du moyeu.

Certains moyeux, notamment ceux motorisés, présentent un index au niveau d'une face externe d'un flasque, qui gêne l'enfilage du rayon depuis ladite face externe. En pratique, certains moyeux possèdent trois index décalés régulièrement de 120° autour de l'axe du moyeu.

Dans cette situation, le procédé selon l'invention est également remarquable ce que, pendant la rotation du moyeu, le procédé comprend des étapes consistant à :
- déterminer la position angulaire d'un index présent sur le moyeu au niveau d'une face externe d'un flasque ;
- commander, lors des opérations d'enfilage des rayons, l'éjection du rayon depuis une face interne du flasque au niveau dudit index.

Selon une forme de réalisation particulière, le moyeu est entraîné en rotation par l'intermédiaire d'un galet positionné contre une partie du moyeu, tel que par exemple contre la tranche de l'un des flasques du moyeu, le galet étant entraîné en rotation par un moteur de sorte à entraîner concomitamment en rotation le moyeu.

Avantageusement, pendant les opérations d'enfilage des rayons, les dispositifs d'éjection restent fixes, et le moyeu est déplacé par un système polyarticulé pour positionner successivement les orifices devant les dispositifs d'éjection.

L'invention concerne également une installation d'enfilage de rayons pour la mise en œuvre du procédé décrit ci-avant, comprenant :
- des moyens de mise en rotation du moyeu autour de son axe ;
- deux à quatre dispositifs d'éjection de rayons destinés à éjecter successivement un rayon dans un orifice d'un flasque ;
- des moyens de positionnement des orifices, un par un, devant les dispositifs d'éjection.

Selon l'invention, l'installation est remarquable en ce qu'elle comprend également des moyens de détermination des positions angulaires et radiales, et notamment des variations de position angulaires et radiales des orifices par rapport à un référentiel dont les coordonnées sont connues, et une unité de commande programmée pour commander les moyens de mise en rotation du moyeu et les moyens de positionnement des orifices en fonction des positions angulaires et radiales déterminées.

Avantageusement, les moyens de positionnement des orifices sont un système polyarticulé équipé d'un préhenseur adapté pour saisir le moyeu, le préhenseur comprenant de préférence un capteur de la position angulaire du moyeu et les moyens de mise en rotation du moyeu.

### Brève description des dessins

[Fig. 1] illustre en perspective l'installation pour la mise en œuvre du procédé selon l'invention.
[Fig. 2] est une vue similaire à celle de la figure une, en détail sur le système polyarticulé.
[Fig. 3] illustre en perspective le préhenseur du moyeu du système polyarticulé.
[Fig. 4] illustre en perspective un moyeu d'une roue à rayons.
[Fig. 5] illustre en perspective le moyeu de la figure quatre positionné au niveau d'un poste de mesure des positions des orifices.
[Fig. 6] illustre en perspective un autre type de moyeu, notamment un moyeu motorisé.
[Fig.7] illustre en perspective, le moyeu de la figure six positionné au niveau du poste de mesure de la position des orifices.

### Description détaillée de l'invention

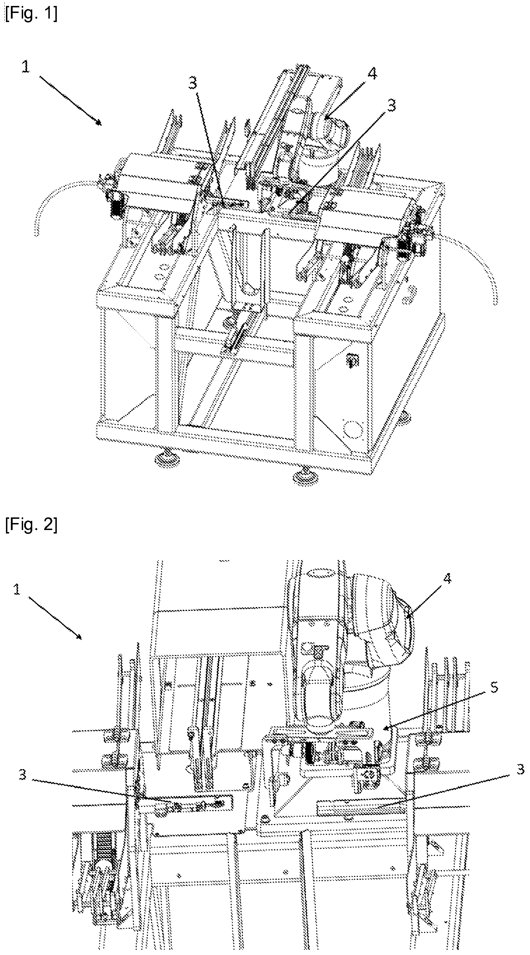

En référence aux figures 1 à 7, l'invention concerne un procédé et une installation (1) d'enfilage de rayons dans un moyeu (2) d'une roue à rayons.

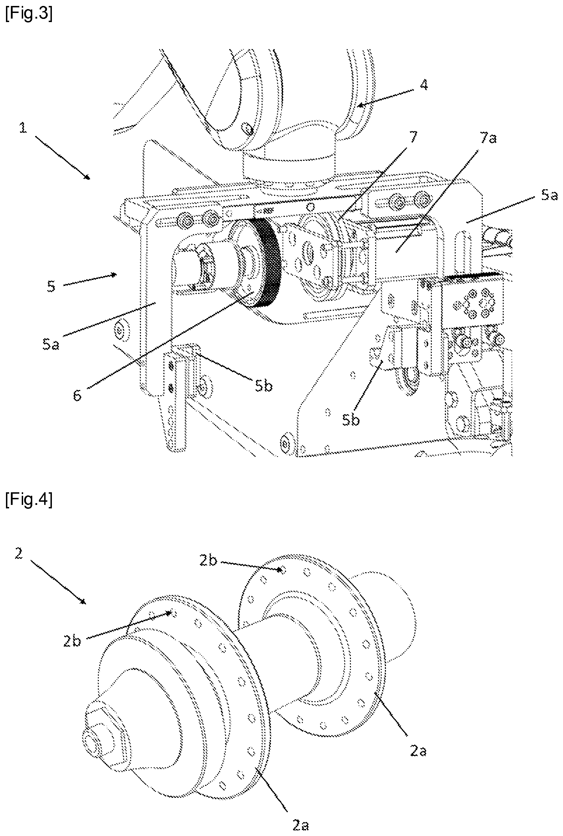

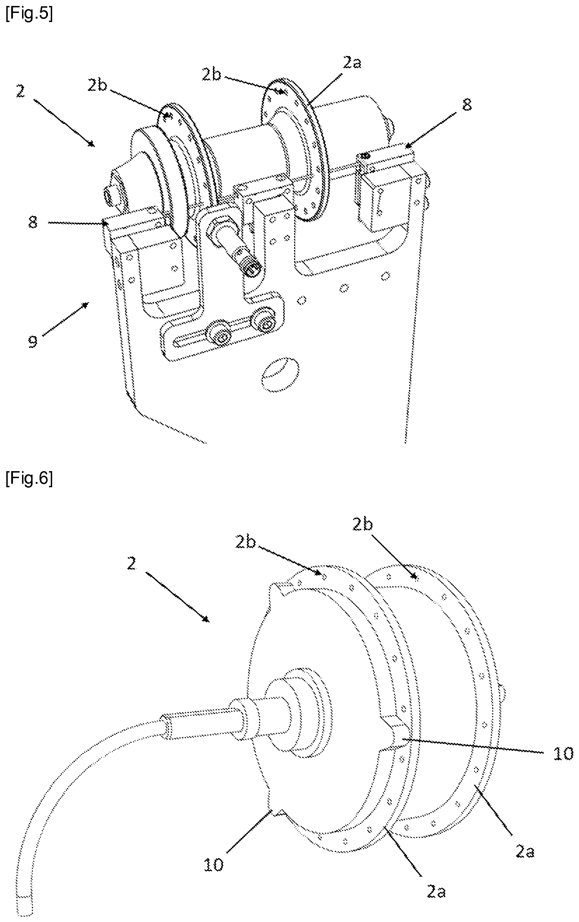

D'une manière connue, et en référence aux figures 4 et 6, un moyeu (2) comprend deux flasques (2a), chacun pourvu d'une couronne d'orifices (2b) dans lesquels sont destinés à être enfilés des rayons.

Pour réaliser les opérations d'enfilage en tant que telles, le moyeu (2) est entraîné en rotation autour de son axe selon des pas successifs pour positionner les orifices (2b) des flasques (2a), un par un, devant des dispositifs d'éjection (3) de rayons, lesquels sont actionnés successivement pour éjecter les rayons dans les orifices (2b) afin de réaliser les opérations d'enfilage.

Les installations d'enfilage de rayons et les dispositifs d'éjection sont bien connus de l'état de la technique de sorte qu'ils ne seront pas décrits plus en détails.

L'invention permet, préalablement aux opérations d'enfilage ou bien lors de celles-ci, de déterminer de manière précise les positions angulaires et radiales de chaque orifice (2b) en vue de positionner correctement les orifices (2b) des flasques (2a) devant les dispositifs d'éjection (3) lors des opérations d'enfilage des rayons.

L'invention s'applique par exemple lorsqu'il s'agit de garder le moyeu (2) fixe et de déplacer les dispositifs d'éjection (3) devant chaque orifice (2b) après rotation du moyeu (2). Mais, l'invention trouve une application avantageuse en laissant les dispositifs d'éjection (3) fixes, et en déplaçant, pendant les opérations d'enfilage des rayons, le moyeu (2) lui-même par l'intermédiaire d'un système polyarticulé (4) afin de positionner successivement les orifices (2b) des flasques (2a) devant les dispositifs d'éjection (3).

Dans la suite de la description, et dans les figures, l'invention est décrite avec le système polyarticulé (4).

Selon l'invention, préalablement au positionnement des orifices (2b) devant les dispositifs d'éjection, le procédé comprend les étapes consistant à :
- déterminer les positions angulaires et radiales des orifice (2b) par rapport à référentiel, par exemple une partie du système polyarticulé (4) lui-même, dont les coordonnées sont connues ;
- réaliser ensuite les opérations d'enfilage des rayons en commandant les pas de pivotement successifs du moyeu (2) en fonction des positions angulaires des orifices (2b) préalablement déterminées, et en commandant, lors du positionnement des orifices (2b) devant les dispositifs d'éjection (3), un déplacement radial relatif entre le dispositif d'éjection correspondant et le moyeu (2), en fonction des positions radiales des orifices (2b) préalablement déterminées.

Les positions angulaires et radiales des orifices (2b) sont déterminées par exemple avant toute opération d'enfilage des rayons, ou lors des opérations d'enfilage pendant les rotations des pas successifs.

Dans l'exemple illustré, le système polyarticulé (4) comprend un préhenseur (5) adapté pour saisir le moyeu (2).

En référence à la figure 3, le préhenseur (5) comprend une structure en forme de « U » inversé définissant deux branches (5a) entre lesquelles le moyeu (2) est destiné à être supporté.

En particulier, les extrémités libres des branches (5a) sont équipées de supports (5b) sur lesquelles les extrémités du moyeu (2) sont destinées à reposer. La distance entre les branches (5a) est réglable pour s'adapter aux différentes tailles du moyeu (2).

Le préhenseur (5) comprend également un capteur de la position angulaire (6) du moyeu (2) et des moyens de mise en rotation (7) du moyeu (2).

En particulier, les moyens de mise en rotation (7) du moyeu (2) se présentent par exemple sous la forme d'un galet destiné à venir en appui par exemple contre une tranche de l'un des flasques (2a) du moyeu (2). Le galet est entraîné en rotation par un moteur (7a) de sorte à entraîner concomitamment en rotation le moyeu (2). Le galet est positionné au niveau de la base du U, c'est-à-dire en partie supérieure et de manière opposée aux supports (5b) du moyeu (2). De cette manière, le moyeu (2) se retrouve positionné en appui entre le galet et les supports (5b) et est donc maintenu dans cette position.

Le capteur de position angulaire (6) se présente, quant à lui, par exemple sous la forme d'un codeur rotatif, par exemple positionné en appui contre l'autre tranche du flasque (2a) du moyeu (2), de sorte à être entraîné en rotation avec le moyeu (2).

L'installation (1) présente également des moyens de détection (8) des orifices (2b) qui peuvent être soient montés directement sur le préhenseur (5), soit positionnés sur une station (9) déportée.

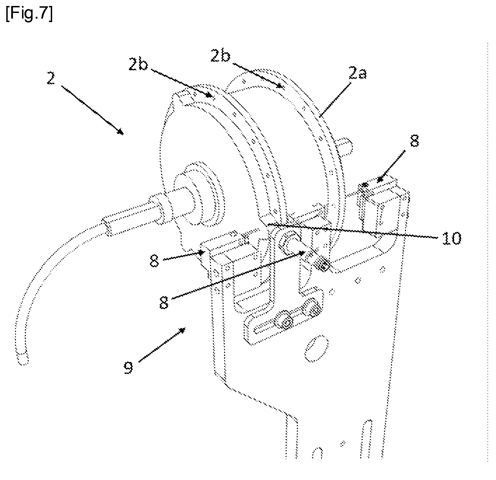

Dans l'exemple illustré, les moyens de détection (8) des orifices (2b) sont positionnés sur une station (9) déportée qui est notamment illustrée aux figures 5 et 7.

En référence à ces figures, le système polyarticulé (4), non représenté sur celles-ci, est destiné à venir positionner le moyeu (2) devant la station (9) déportée de détection pour analyser la position de chaque orifice (2b) des flasques (2a).

Les moyens de détection (8) se présentent par exemple sous la forme de cellules de photo détection, de capteurs laser, ou de tout autre capteurs appropriés, positionnés de part et d'autre de chaque flasque (2a) lorsque le moyeu (2) est en position de détection, tel qu'illustré.

En d'autres termes, les moyens de détection (8) des orifices (2b) viennent détecter la présence d'un orifice (2b) pendant l'opération de mise en rotation d'un tour complet du moyeu (2).

Étant donné que pendant cette opération la position angulaire du moyeu (2) est mesurée, notamment par le codeur rotatif, cela permet de déterminer la position angulaire de chaque orifice (2b) par rapport au référentiel qui est le préhenseur (5) dans cette forme de réalisation.

En pratique, à chaque signal de détection émis par les moyens de détection (8) des orifices (2b), on enregistre la position angulaire déterminée par le codeur. L'axe de l'orifice (2b) est par exemple déterminé par calcul entre la position au front montant et au front descendant des signaux des moyens de détection (8) des orifices (2b).

Ainsi, par exemple avant toute opération d'enfilage, le moyeu (2) est positionné devant cette station (9) de détection, et est entraîné en rotation tout en mesurant la position angulaire du moyeu (2) est en détectant successivement la présence des orifices (2b) pour déterminer leur position angulaire.

L'installation (1) mettant en œuvre le procédé comprend une unité de commande programmée pour commander les moyens de mise en rotation (7) du moyeu (2) de sorte à commander, lors des opérations d'enfilage des rayons, notamment lors du positionnement des différents orifices (2b) devant les différents dispositifs d'éjection (3), les pas de pivotement successifs du moyeu (2) en fonction des positions angulaires des orifices (2b) préalablement déterminées.

Pour pallier une qualité de fabrication moindre des moyeux (2), notamment lorsque les orifices (2b) de réception des rayons ne s'inscrivent pas tous sur un même cercle, pendant la rotation du moyeu (2), le procédé comprend également une étape consistant à déterminer la position radiale de chaque orifice (2b) par rapport au référentiel et à commander ensuite, lors du positionnement des orifices (2b) devant les dispositifs d'éjection (3), un déplacement radial du moyeu (2) lorsque celui-ci est mobile, ou des dispositifs d'éjection (3) si ce sont eux qui sont déplacés, pour compenser les écarts radiaux des différents orifices (2b), et ce afin de positionner correctement les orifices (2b) devant les dispositifs d'éjection (3) en fonction des positions radiales préalablement déterminées.

Selon une forme de réalisation particulière, les positions radiales sont déterminées en mettant en œuvre des moyens de détection (8) des orifices (2b), non pas sous la forme de cellules de photo détection, mais par exemple sous la forme de caméras ou capteurs CCD, associé à un système de traitement d'image, permettant de détecter à la fois les positions angulaires et les positions radiales des orifices (2b). Bien entendu tout autre moyen de détection des positions en X et en Y des orifices (2b) peuvent être utilisés sans sortir du cadre de l'invention. L'avantage d'utiliser un capteur CCD associé à un système de traitement d'image est que les positions des orifices peuvent être détectées, par exemple préalablement à toute opération d'enfilage des rayons, sans faire tourner le moyeu. L'ensemble des positions est détecté simultanément.

En référence aux figures 6 et 7, et lorsqu'il s'agit d'un moyeu (2) motorisé, celui-ci présente des index (10) au niveau d'une face externe du flasque (2a). Ici, trois index (10) décalés angulairement de 120° sont présents. Ces index (10) empêchent l'enfilage des rayons depuis une face externe du flasque (10) au niveau de ces index (10).

Pour pallier cet inconvénient, le procédé selon l'invention comprend, pendant la rotation du moyeu (2), une étape consistant à déterminer la position angulaire de ces index (10), pour ensuite commander, lors des opérations d'enfilage des rayons, l'éjection du rayon depuis une face interne du flasque (2a) au niveau de ces index (10).

De la même manière que pour les orifices (2b), la position angulaire des index (10) est déterminée par la combinaison de la mesure de la position angulaire du moyeu (2), avec le codeur, et par l'utilisation de moyens de détection (8) du type cellule photo détection, capteurs laser ou CCD, ou tout autre moyen approprié, intégrés au préhenseur (5), ou fixés sur la structure de la station (9) de détection comme dans l'exemple illustré.

Il ressort donc de ce qui précède que l'invention fournit bien un procédé et une installation (1) permettant d'enfiler des rayons dans des orifices (2b) d'un moyeu (2) avec une précision optimale, tout en s'affranchissant des tolérances de précision des positions angulaires et radiales des orifices (2b).

## Revendications

1. Procédé d'enfilage de rayons dans un moyeu (2) à deux flasques (2a) d'une roue à rayons, les flasques (2a) étant chacun pourvu d'une couronne d'orifices (2b) de réception des rayons, le moyeu (2) étant entrainé en rotation autour de son axe selon des pas successifs pour positionner les orifices (2b) des flasques (2a), un par un, devant des dispositifs d'éjection (3) de rayons qui sont actionnés successivement pour éjecter un rayon dans les orifices (2b) afin de réaliser des opérations d'enfilage en tant que telles, le procédé étant ***caractérisé* en ce que**, préalablement au positionnement des orifices (2b) devant les dispositifs d'éjection, le procédé comprend des étapes consistant à :
- déterminer les positions angulaires et radiales des orifices (2b) par rapport à un référentiel dont les coordonnées sont connues :
* soit en faisant tourner le moyeu, et par une combinaison d'un capteur de position angulaire (6) du moyeu (2) et de moyens de détection (8) des orifices (2b) ;
* soit par des capteurs CCD associés à un système de traitement d'image permettant de détecter à la fois les positions angulaires et les positions radiales des orifices (2b).
- réaliser ensuite les opérations d'enfilage des rayons en commandant les pas de pivotement successifs du moyeu (2) en fonction des positions angulaires des orifices (2b) préalablement déterminées, et en commandant, lors du positionnement des orifices (2b) devant les dispositifs d'éjection (3), un déplacement radial relatif entre le dispositif d'éjection correspondant et le moyeu (2), en fonction des positions radiales des orifices (2b) préalablement déterminées.

2. Procédé selon la revendication 1, ***caractérisé* en ce que** le capteur de position angulaire (6) du moyeu (2) est un codeur rotatif entrainé en rotation avec le moyeu (2).

3. Procédé selon la revendication 1, ***caractérisé* en ce que** les moyens de détection (8) des orifices (2b) se présentent sous la forme de cellules de photo détection ou de capteurs optiques.

4. Procédé selon la revendication 1, ***caractérisé* en ce que**, pendant la rotation du moyeu (2), le procédé comprend des étapes consistant à :
- déterminer la position angulaire d'un index (10) présent sur le moyeu (2) au niveau d'une face externe d'un flasque, qui empêcherait l'enfilage du rayon par ladite face externe ;
- commander, lors des opérations d'enfilage des rayons, l'éjection du rayon depuis une face interne du flasque au niveau dudit index (10).

5. Procédé selon la revendication 1 ***caractérisé* en ce que** le moyeu (2) est entraîné en rotation par l'intermédiaire d'un galet positionné contre une partie du moyeu (2), le galet étant entraîné en rotation par un moteur (7a) de sorte à entrainer concomitamment en rotation le moyeu (2).

6. Procédé selon la revendication 1 ***caractérisé* en ce que**, pendant les opérations d'enfilage des rayons, les dispositifs d'éjection (3) restent fixes, et le moyeu (2) est déplacé par un système polyarticulé (4) pour positionner successivement les orifices (2b) devant les dispositifs d'éjection (3)

7. Installation (1) d'enfilage de rayons pour la mise en œuvre du procédé de la revendication 1, l'installation (1) comprend :
- des moyens de mise en rotation (7) du moyeu (2) autour de son axe ;
- deux à quatre dispositifs d'éjection (3) de rayons destinés à éjecter successivement un rayon dans un orifice (2b) d'un flasque ;
- des moyens de positionnement des orifices (2b), un par un, devant les dispositifs d'éjection (3), l'installation (1) étant ***caractérisée* en ce qu'**elle comprend des moyens de détermination des positions angulaires et radiales des orifices (2b) par rapport à un référentiel dont les coordonnées sont connues, et une unité de commande programmée pour commander les moyens de mise en rotation (7) du moyeu (2) et les moyens de positionnement des orifices (2b) en fonction des positions angulaires et radiales déterminées.

8. Installation (1) selon la revendication 7 ***caractérisée* en ce que** les moyens de positionnement des orifices (2b) sont un système polyarticulé (4) équipé d'un préhenseur (5) adapté pour saisir le moyeu (2), le préhenseur (5) comprend un capteur de la position angulaire (6) du moyeu (2) et les moyens de mise en rotation (7) du moyeu (2).

## Patentansprüche

1. Verfahren zum Einfädeln von Speichen in eine Nabe (2) mit zwei Flanschen (2a) eines Speichenrades, wobei die Flansche (2a) jeweils mit einem Kranz von Öffnungen (2b) zur Aufnahme der Speichen versehen sind, und wobei die Nabe (2) in aufeinanderfolgenden Schritten um ihre Achse gedreht wird, um die Öffnungen (2b) der Flansche (2a) nacheinander vor Auswurfvorrichtungen (3) für Speichen zu positionieren, welche nacheinander betätigt werden, um eine Speiche in die Öffnungen (2b) einzuschießen, um die Einfädelvorgänge als solche durchzuführen;
wobei das Verfahren ***dadurch gekennzeichnet* ist, dass** es vor dem Positionieren der Öffnungen (2b) vor den Auswurfvorrichtungen Schritte umfasst, welche darin bestehen:
- die Winkel- und Radialpositionen der Öffnungen (2b) relativ zu einem Koordinatenbezugssystem mit bekannten Koordinaten zu bestimmen:
* entweder durch Drehen der Nabe und durch eine Kombination eines Winkelpositionssensors (6) der Nabe (2) mit Detektionsmitteln (8) zum Erkennen der Öffnungen (2b);
* oder durch CCD-Sensoren in Verbindung mit einem Bildverarbeitungssystem, das sowohl die Winkelpositionen als auch die Radialpositionen der Öffnungen (2b) erkennen kann;
- anschließend die Einfädelvorgänge dadurch durchzuführen, dass die aufeinanderfolgenden Schwenkschritte der Nabe (2) in Abhängigkeit von den zuvor bestimmten Winkelpositionen der Öffnungen (2b) gesteuert werden und dass, beim Positionieren der Öffnungen (2b) vor den Auswurfvorrichtungen (3), eine radiale Relativbewegung zwischen der entsprechenden Auswurfvorrichtung und der Nabe (2) in Abhängigkeit von den zuvor bestimmten Radialpositionen der Öffnungen (2b) gesteuert wird.

2. Verfahren nach Anspruch 1, ***dadurch gekennzeichnet,* dass** der Winkelpositionssensor (6) der Nabe (2) ein Rotationsencoder ist, der gemeinsam mit der Nabe (2) in Rotation angetrieben wird.

3. Verfahren nach Anspruch 1, ***dadurch gekennzeichnet,* dass** die Detektionsmittel (8) zum Erkennen der Öffnungen (2b) in Form von Photodetektionszellen oder optischen Sensoren ausgebildet sind.

4. Verfahren nach Anspruch 1, ***dadurch gekennzeichnet,* dass** das Verfahren während der Rotation der Nabe (2) Schritte umfasst, welche darin bestehen:
- die Winkelposition eines Indexes (10) zu bestimmen, der an der Nabe (2) auf einer Außenfläche eines Flansches angeordnet ist und der das Einfädeln der Speiche über die genannte Außenfläche verhindern würde;
- beim Einfädeln der Speichen das Auswerfen der Speiche auf der Innenfläche des Flansches an der Position des genannten Indexes (10) zu steuern.

5. Verfahren nach Anspruch 1, ***dadurch gekennzeichnet,* dass** die Nabe (2) über eine Rolle in Rotation angetrieben wird, welche gegen einen Abschnitt der Nabe (2) positioniert ist und ihrerseits durch einen Motor (7a) in Rotation versetzt wird, sodass die Nabe (2) gleichzeitig in Rotation angetrieben wird.

6. Verfahren nach Anspruch 1, ***dadurch gekennzeichnet,* dass** während der Einfädelvorgänge für die Speichen die Auswurfvorrichtungen (3) feststehen und die Nabe (2) durch ein mehrachsiges Gelenksystem (4) bewegt wird, um die Öffnungen (2b) nacheinander vor den Auswurfvorrichtungen (3) zu positionieren.

7. Einfädelanlage (1) für Speichen zur Durchführung des Verfahrens nach Anspruch 1, wobei die Anlage (1) umfasst:
- Mittel (7) zum Drehen der Nabe (2) um ihre Achse;
- zwei bis vier Auswurfvorrichtungen (3) für Speichen, die dazu bestimmt sind, nacheinander eine Speiche in eine Öffnung (2b) eines Flansches auszuschießen;
- Mittel zum Positionieren der Öffnungen (2b) nacheinander vor den Auswurfvorrichtungen (3);
wobei die Anlage (1) ***dadurch gekennzeichnet* ist, dass** sie Mittel zur Bestimmung der Winkel- und Radialpositionen der Öffnungen (2b) relativ zu einem Koordinatenbezugssystem mit bekannten Koordinaten umfasst sowie eine Steuereinheit, welche programmiert ist, die Drehmittel (7) der Nabe (2) und die Positioniermittel der Öffnungen (2b) in Abhängigkeit von den bestimmten Winkel- und Radialpositionen anzusteuern.

8. Anlage (1) nach Anspruch 7, ***dadurch gekennzeichnet,* dass** die Mittel zum Positionieren der Öffnungen (2b) ein mehrachsiges Gelenksystem (4) sind, das mit einem Greifer (5) ausgestattet ist, der zum Greifen der Nabe (2) geeignet ist, wobei der Greifer (5) einen Winkelpositionssensor (6) der Nabe (2) sowie die Drehmittel (7) der Nabe (2) umfasst.

## Claims

1. Method for inserting spokes into a hub (2) with two flanges (2a) of a spoked wheel, the flanges (2a) each being provided with a ring of holes (2b) for receiving the spokes, the hub (2) being driven in rotation about its axis in successive steps in order to position the holes (2b) of the flanges (2a), one by one, in front of spoke-ejection devices (3) which are actuated successively to eject a spoke into the holes (2b) so as to carry out the spoke-insertion operations as such, the method being ***characterised* in that**, prior to positioning the holes (2b) in front of the ejection devices, the method comprises steps consisting of:
- determining the angular and radial positions of the holes (2b) with respect to a reference frame whose coordinates are known:
* either by rotating the hub and by combining an angular-position sensor (6) of the hub (2) with detection means (8) for detecting the holes (2b);
* or by CCD sensors associated with an image-processing system capable of detecting both the angular positions and the radial positions of the holes (2b);
- subsequently carrying out the spoke-insertion operations by controlling the successive pivoting steps of the hub (2) as a function of the previously determined angular positions of the holes (2b), and by controlling, when the holes (2b) are positioned in front of the ejection devices (3), a radial relative displacement between the corresponding ejection device and the hub (2), as a function of the previously determined radial positions of the holes (2b).

2. Method according to claim 1, ***characterised* in that** the angular-position sensor (6) of the hub (2) is a rotary encoder driven in rotation with the hub (2).

3. Method according to claim 1*,* ***characterised* in that** the detection means (8) for detecting the holes (2b) are in the form of photo-detection cells or optical sensors.

4. Method according to claim 1*,* ***characterised* in that**, during rotation of the hub (2), the method comprises steps consisting of:
- determining the angular position of an index (10) present on the hub (2) on an outer face of a flange, which would prevent the spoke from being inserted through said outer face;
- controlling, during the spoke-insertion operations, the ejection of the spoke from an inner face of the flange at the location of said index (10).

5. Method according to claim 1*,* ***characterised* in that** the hub (2) is driven in rotation via a roller positioned against a portion of the hub (2), the roller being driven in rotation by a motor (7a) so as to simultaneously drive the hub (2) in rotation.

6. Method according to claim 1*,* ***characterised* in that**, during the spoke-insertion operations, the ejection devices (3) remain stationary and the hub (2) is moved by a multi-articulated system (4) in order to position the holes (2b), successively, in front of the ejection devices (3).

7. Spoke-insertion installation (1) for implementing the method of claim 1, the installation (1) comprising:
- means (7) for rotating the hub (2) about its axis;
- two to four spoke-ejection devices (3) intended to successively eject a spoke into a hole (2b) of a flange;
- means for positioning the holes (2b), one by one, in front of the ejection devices (3), the installation (1) being ***characterised* in that** it comprises means for determining the angular and radial positions of the holes (2b) with respect to a reference frame whose coordinates are known, and a control unit programmed to control the rotation means (7) of the hub (2) and the means for positioning the holes (2b) as a function of the determined angular and radial positions.

8. Installation (1) according to claim 7, ***characterised* in that** the means for positioning the holes (2b) is a multi-articulated system (4) equipped with a gripper (5) adapted to grasp the hub (2), the gripper (5) comprising an angular-position sensor (6) of the hub (2) and the rotation means (7) of the hub (2).
